# EUROPÄISCHE PATENTSCHRIFT

(11) **EP 3 176 079 B1**
(45) Veröffentlichungstag und Bekanntmachung des Hinweises auf die Patenterteilung: **20.01.2021**
(21) Anmeldenummer: 16196123.0
(22) Anmeldetag: 27.10.2016
(51) Int. Cl.: B64C 11/46, B64C 31/036, B64D 27/24, B64D 35/06

(54) **ANTRIEBSVORRICHTUNG FÜR EINEN GLEITSCHIRM**
DRIVING DEVICE FOR A PARACHUTE
GROUPE PROPULSEUR POUR DELTAPLANE

(30) Priorität: 27.11.2015 DE 102015120680
(43) Veröffentlichungstag der Anmeldung: 07.06.2017
(73) Patentinhaber: SKY SPORT INTERNATIONAL PVT LTD., Katunayake (LK)
(72) Erfinder: KURRLE, Ulrich, Katunayake (LK)
(74) Vertreter: Hoppe, Lars

(56) Entgegenhaltungen:
- EP-A2- 2 607 236
- WO-A1-2007/073361
- WO-A1-2014/009931
- DE-A1-102013 000 461

## Beschreibung

Die vorliegende Erfindung betrifft eine Antriebsvorrichtung für einen Gleitschirm, wobei der Gleitschirm ein Gurtzeug zum Aufnehmen eines Piloten aufweist, umfassend einen Tragrahmen und an dem Tragrahmen befestigt einen ersten Motor, einen ersten Propeller und einen zweiten Propeller.

Des Weiteren betrifft die vorliegende Erfindung einen Gleitschirm, umfassend ein Gurtzeug zum Aufnehmen eines Piloten und eine Antriebsvorrichtung.

Abschließend betrifft die vorliegende Erfindung ein Verfahren zum Starten eines Gleitschirmes, wobei der Gleitschirm ein Gurtzeug zum Aufnehmen eines Piloten und eine Antriebsvorrichtung aufweist, umfassend den Schritt Aufziehen des Gleitschirmes.

Neben allgemein bekannten antriebslosen Gleitschirmen sind im Stand der Technik auch motorisierte Gleitschirme vertreten. Beispielsweise beschreibt die Gebrauchsmusterschrift DE 20 2009 007 087 U1 und die Offenlegungsschrift DE 10 2010 028 502 A1 einen motorisierten Gleitschirm, der über eine Antriebsvorrichtung verfügt. Die Antriebsvorrichtung umfasst einen Motor mit einem Propeller, wobei der Motor in ein spezielles Gurtzeug integriert und der Propeller hinter dem Piloten angeordnet ist. Nachteilig hierbei ist, dass ein spezielles Gurtzeug erforderlich ist. Zusätzlich arbeitet die Antriebsvorrichtung nur wenig effizient, da der Pilot den Propeller von vorne zumindest teilweise verdeckt. Darüber hinaus tritt im Flugbetrieb ein Drehmoment auf, das die Flugstabilität beeinträchtigt. Zur Kompensation des Drehmoments offenbart die Offenlegungsschrift DE 196 14 049 A1 eine Antriebsvorrichtung, die zwei gegenläufige und koaxial angeordnete Propeller aufweist . Die DE102013000461 zeigt eine gattungsgemäße Antriebsvorrichtung, die ebenfalls zwei gegenläufige Propeller benutzt. Allen diesen Antriebsvorrichtungen ist gemein, dass sie relativ groß und schwer sind und damit insbesondere bei einem Starten des Gleitschirmes hinderlich und unfallträchtig sind.

Es ist daher Aufgabe der vorliegenden Erfindung, eine Antriebsvorrichtung der eingangs genannten Art anzugeben, die effizient ist und ein sicheres Starten des Gleitschirmes ermöglicht.

Zur Lösung dieser Aufgabe schlägt die vorliegende Erfindung eine Antriebsvorrichtung der eingangs genannten Art vor, wobei in einem Flugbetrieb des Gleitschirmes der erste Propeller links von dem Piloten und der zweite Propeller rechts von dem Piloten angeordnet sind. Durch die seitliche Anordnung sind die Propeller nahezu vollständig freigestellt, sodass ein Durchkämmen der Luft ungehindert erfolgen kann. Das hierdurch resultierende Strömungsfeld weist wenig Wirbel auf. Somit ist die erfindungsgemäße Antriebsvorrichtung sehr effizient. Weiterhin ist durch die seitliche Anordnung der Propeller die Beinfreiheit des Piloten beim Starten nicht eingeschränkt und eine kompensationsbedürftige Schwerpunktverlagerung des Systems Gleitschirm tritt nicht auf. Folglich ist die erfindungsgemäße Antriebsvorrichtung einfach und sicher zu benutzen.

Der Tragrahmen weist eine Stange auf, wobei der erste Propeller an einem ersten Ende der Stange und der zweite Propeller an einem zweiten Ende der Stange angeordnet sind. Die starre Stange bewirkt eine gleichbleibende Beabstandung der Propeller, ohne den Tragrahmen unnötig schwerer zu machen. Bevorzugt besteht der Tragrahmen im Wesentlichen aus der Stange. Besonders bevorzugt besteht der Tragrahmen aus der Stange. Insbesondere weist die Stange einen zwischen Endbereichen der Stange angeordneten Mittelbereich auf, der relativ zu den Endbereichen axial versetzt ist, beispielsweise um 20 cm. Dieser Versatz verbessert die Ergonomie der Stange. In einer bevorzugten Ausgestaltung ist die Stange teilbar ausgebildet, insbesondere mittig teilbar, um einen Transport der Antriebsvorrichtung zu erleichtern.

Im Flugbetrieb ist die Stange vor dem Piloten angeordnet. Somit hat der Pilot die Stange stets im Blick und griffbereit, um eine an der Stange angeordnete Motorsteuerung zu bedienen und gegebenenfalls die Stange manuell auszurichten.

Der Tragrahmen weist Befestigungsmittel zum Befestigen der Antriebsvorrichtung an einem Gurtzeug eines antriebslosen Gleitschirmes auf. Mittels der Befestigungsmittel ist die erfindungsgemäße Antriebsvorrichtung mit einem beliebigen Gurtzeug, insbesondere eines konventionellen Gleitschirmes, verbindbar. Folglich kann ein beliebiger Gleitschirm auf einen motorisierten Gleitschirm umgerüstet werden, ohne dass das Gurtzeug ersetzt werden müsste.

Äußerst vorteilhaft ist erfindungsgemäß vorgesehen, dass die Befestigungsmittel derart mit dem Gurtzeug zusammenwirken, dass Rotationsachsen des ersten Propellers und des zweiten Propellers in einem unbelasteten Zustand des Gurtzeuges vertikal und im Flugbetrieb horizontal orientiert sind. In anderen Worten ausgedrückt sind die Propeller bei einem Startlauf nach unten orientiert und schwenken erst bei einem Belasten des Gurtzeuges, nämlich dann, wenn der Flugbetrieb aufgenommen wird, nach vorne oben. Durch die zunächst hängende Orientierung der Propeller ist eine Unfallgefahr beim Starten des Gleitschirmes deutlich reduziert.

Hierzu ist erfindungsgemäß vorgesehen, dass die Befestigungsmittel starr mit dem Tragrahmen verbunden sind und eine Aufnahme zum Aufnehmen eines im Wesentlichen rechteckig geformten Karabiners des Gurtzeuges aufweisen, wobei die Aufnahme einen länglichen Anschlag zum Anlegen eines zumindest teilweise geraden Schenkels des Karabiners und ein Rückhalteelement zum Zurückhalten des Karabiners an dem Anschlag aufweist. Durch die Form der Aufnahme und das Rückhalteelement ist der Karabiner in der Aufnahme drehfest aufgenommen. Bei einem Belasten des Gurtzeuges dreht sich der Karabiner und mit ihm die Aufnahme, die ihrerseits den Tragrahmen und damit die Antriebseinheit aufrichtet. Das Rückhalteelement ist vorzugsweise ein hakenförmiger Vorsprung, der an einem federbelasteten Hebel angeordnet ist. Bevorzugt weisen die Befestigungsmittel zwei Aufnahmen auf.

In einer anderen vorteilhaften Ausgestaltung der vorliegenden Erfindung weist die Antriebsvorrichtung einen zweiten Motor auf, wobei der erste Motor den ersten Propeller und der zweite Motor den zweiten Propeller antreibend ausgebildet sind. Jedem der Propeller ist ein eigener Motor zugeordnet. Somit sind die Propeller unabhängig voneinander betreibbar und ein den ersten Propeller mit dem zweiten Propeller verbindendes Getriebe ist obsolet.

In einer weiterführenden Ausgestaltung der vorliegenden Erfindung ist vorgesehen, dass der erste Motor den ersten Propeller gegenläufig zu dem zweiten Propeller antreibend ausgebildet ist. Durch die Gegenläufigkeit der Propeller heben sich die aufgrund der Rotationen der Propeller auf den Gleitschirm wirkenden Drehmomente auf, was einem stabilen Geradeausflug zuträglich ist.

In einer sehr vorteilhaften Ausgestaltung der vorliegenden Erfindung sind der erste Motor und der zweite Motor Elektromotoren. Adäquate Elektromotoren sind kompakt und leicht in der Bauweise und lassen sich mittels Batterien logistisch einfach mit Energie versorgen. Des Weiteren treten weder Lärm- noch Abgasemissionen auf, was die Akzeptanz der erfindungsgemäßen Antriebsvorrichtung erhöht.

In einer noch anderen vorteilhaften Ausgestaltung der vorliegenden Erfindung ist vorgesehen, dass der erste Propeller und der zweite Propeller unabhängig voneinander einen Durchmesser in einem Bereich von 45 cm bis 90 cm aufweisen. Derart kleine Propeller sind ausreichend, um den gewünschten Antrieb zu realisieren, und haben den Vorteil, dass die erfindungsgemäße Antriebsvorrichtung kompakt und leicht ausgebildet werden kann und somit den Piloten beim Starten und im Flugbetrieb nicht beeinträchtigt. Besonders bevorzugt weist die Antriebsvorrichtung ein Gesamtgewicht von kleiner als 15 kg auf. Eine solche Antriebsvorrichtung kann beispielsweise einen Höhengewinn von 500 m oder einen stationären Flug mit einer Dauer von 20 min bewirken.

Hinsichtlich des Gleitschirmes ist es Aufgabe der vorliegenden Erfindung, einen Gleitschirm der eingangs genannten Art anzugeben, der effizient antreibbar und sicher steuerbar ist.

Zur Lösung dieser Aufgabe schlägt die vorliegende Erfindung einen Gleitschirm der eingangs genannten Art vor, wobei die Antriebsvorrichtung nach einem der vorhergehenden Ansprüche ausgebildet ist. Die zu der Antriebsvorrichtung beschriebenen Vorteile übertragen sich unmittelbar auf den erfindungsgemäßen Gleitschirm.

Bezüglich des Verfahrens ist es Aufgabe der vorliegenden Erfindung, ein Verfahren der eingangs genannten Art anzugeben, das ein sicheres Starten des Gleitschirmes ermöglicht.

Zur Lösung dieser Aufgabe schlägt die vorliegende Erfindung ein Verfahren der eingangs genannten Art vor, wobei das Verfahren den Schritt Umorientieren einer Rotationsachse eines Propellers der Antriebsvorrichtung von einer vertikalen Richtung in eine horizontale Richtung umfasst. Der Schritt des Umorientierens erlaubt mit großem Vorteil, dass der Propeller beim Startlauf nach unten orientiert ist, um das Verletzungsrisiko für den Piloten zu minimieren, und erst zum Ende des Startens, nämlich dann, wenn der Flugbetrieb aufgenommen wird, nach vorne orientiert ist. Beim Starten des Gleitschirmes ist der Propeller ausgeschaltet. Erst wenn eine stabile Fluglage erreicht worden ist, schaltet der Pilot den Propeller ein. Falls die Antriebsvorrichtung zwei oder mehr Propeller aufweist, werden sämtliche Propeller gemeinsam umorientiert.

Hierbei ist vorgesehen, dass das Umorientieren mittels eines Belastens des Gurtzeuges durch den Piloten erfolgt. Die Belastung des Gurtzeuges wird mittels Befestigungsmitteln der Antriebsvorrichtung auf die Antriebsvorrichtung übertragen, wobei die Rotationsachse des Propellers von einer vertikalen Orientierung in eine horizontale Orientierung umorientiert wird. Da bei einem Abheben des Piloten vom Boden am Ende des Startens des Gleitschirmes das Gurtzeug zwangsläufig belastet wird, ist das erfindungsgemäße Umorientieren ein automatisches Umorientieren, was die Handhabung der Antriebsvorrichtung und damit des Gleitschirmes deutlich vereinfacht und sicherer gestaltet.

Das erfindungsgemäße Verfahren kann noch weitere Schritte umfassen, beispielsweise ein Bergablaufen oder ein Windenschleppen.

Die Erfindung wird in einer bevorzugten Ausführungsform unter Bezugnahme auf die Zeichnungen beispielhaft beschrieben, wobei weitere vorteilhafte Einzelheiten den Figuren der Zeichnungen zu entnehmen sind.

Die Figuren der Zeichnungen zeigen im Einzelnen:
Fig. 1 eine schematische perspektivische Ansicht eines Gleitschirmes gemäß der vorliegenden Erfindung im Flugbetrieb;
Fig. 2 eine schematische Vorderansicht einer Antriebsvorrichtung gemäß der vorliegenden Erfindung;
Fig. 3 eine schematische Draufsicht der Antriebsvorrichtung gemäß der vorliegenden Erfindung;
Fig. 4 eine schematische perspektivische Ansicht von Befestigungsmitteln der Antriebsvorrichtung gemäß der vorliegenden Erfindung an einem Karabiner;
Fig. 5 eine schematische perspektivische Ansicht der Befestigungsmittel der Antriebsvorrichtung gemäß der vorliegenden Erfindung;
Fig. 6 eine schematische perspektivische Ansicht des Gleitschirmes gemäß der vorliegenden Erfindung in einer frühen Startphase; und
Fig. 7 eine schematische perspektivische Ansicht des Gleitschirmes gemäß der vorliegenden Erfindung in einer späten Startphase.

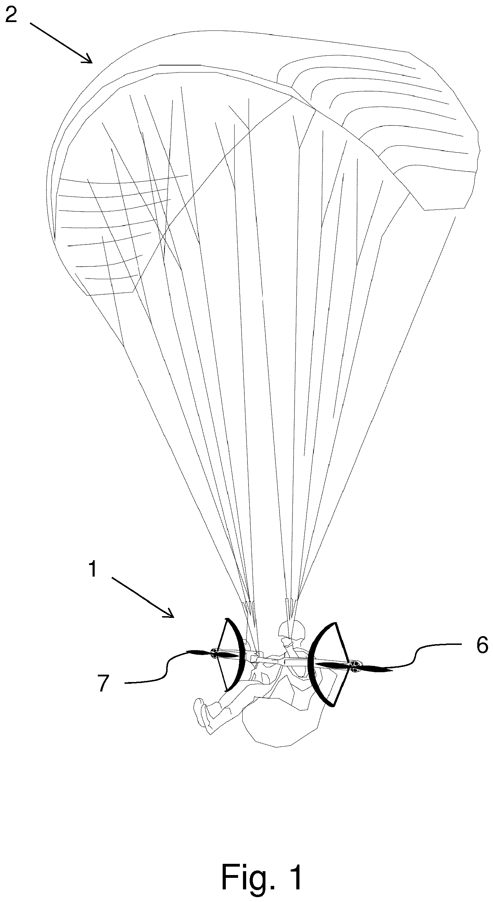

Die **Fig. 1** zeigt eine schematische perspektivische Ansicht eines Gleitschirmes 2 gemäß der vorliegenden Erfindung im Flugbetrieb. Der Gleitschirm 2 umfasst ein Gurtzeug 3 zum Aufnehmen eines Piloten und eine Antriebsvorrichtung 1 zum Antreiben des Gleitschirmes 2. Die Antriebsvorrichtung 1 ist nach vorne orientiert und betriebsbereit. Im Flugbetrieb des Gleitschirmes 2 sind der erste Propeller 6 links von dem Piloten und der zweite Propeller 7 rechts von dem Piloten angeordnet.

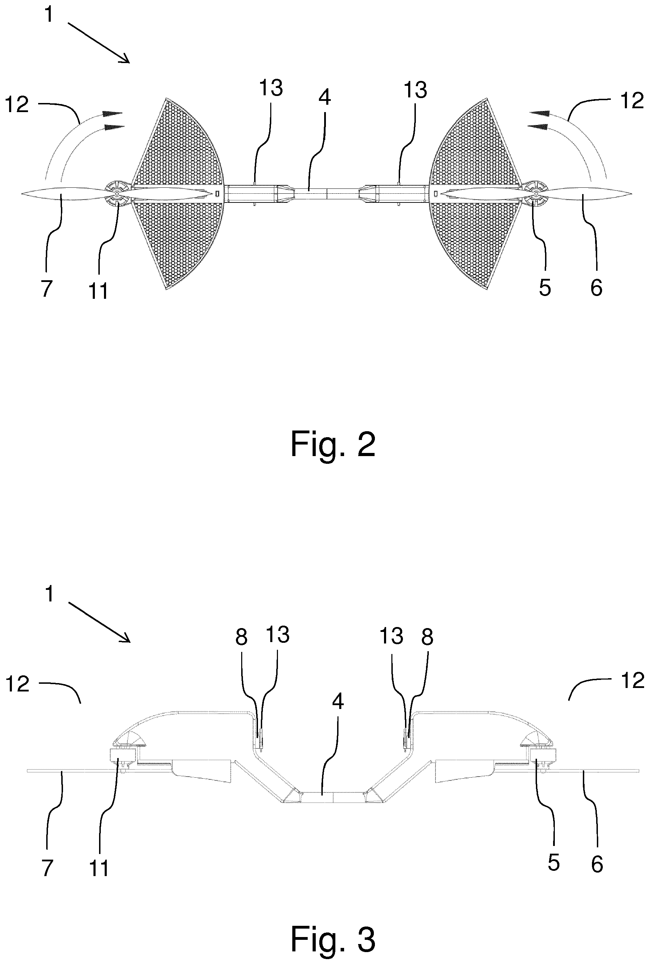

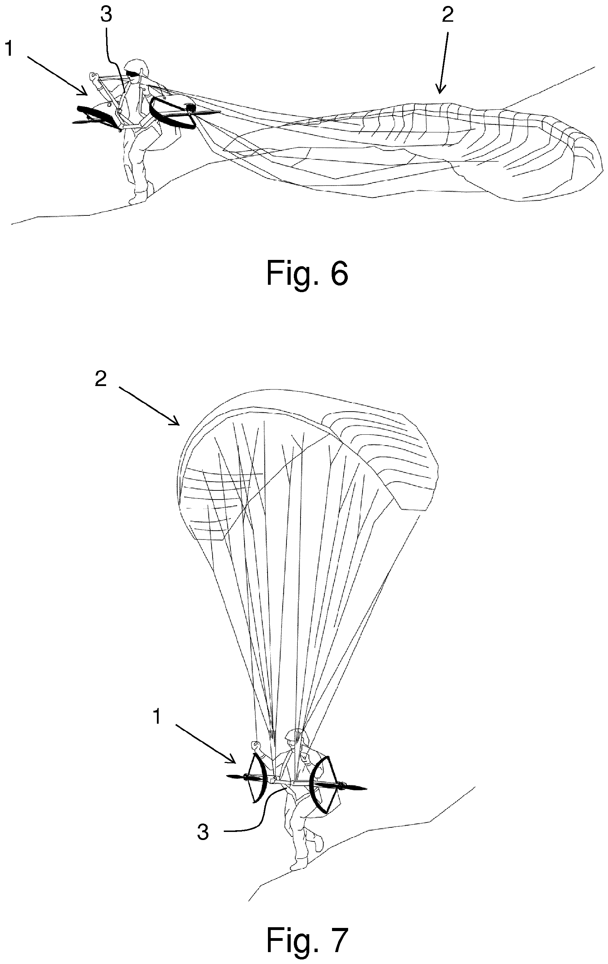

Die **Fig. 2** zeigt eine schematische Vorderansicht einer Antriebsvorrichtung 1 gemäß der vorliegenden Erfindung. Die Antriebsvorrichtung 1 dient zur Verwendung mit einem Gleitschirm 2 und umfasst einen Tragrahmen 4 und an dem Tragrahmen 4 befestigt einen ersten Motor 5, einen zweiten Motor 11, einen ersten Propeller 6 und einen zweiten Propeller 7. Der erste Motor 5 treibt den ersten Propeller 6 an und der zweite Motor 11 treibt den zweiten Propeller 7 an, wobei der erste Motor 5 und der zweite Motor 11 Elektromotoren sind. Zum Betreiben der Elektromotoren weist die Antriebsvorrichtung 1 Batterien und eine Motorsteuerung auf. Im Flugbetrieb des Gleitschirmes 2 sind der erste Propeller 6 links von dem Piloten und der zweite Propeller 7 rechts von dem Piloten angeordnet. Diese Beabstandung der Propeller 6, 7 wird mittels einer Stange realisiert, die den Tragrahmen 4 bildet. Wie in **Fig. 1** deutlich zu sehen ist, ist die Stange im Flugbetrieb vor dem Piloten angeordnet. Der Tragrahmen 4 weist Befestigungsmittel 8 zum Befestigen der Antriebsvorrichtung 1 an dem Gurtzeug 3 eines Gleitschirmes 2 auf (siehe **Fig. 3**). Die Befestigungsmittel 8 wirken derart mit dem Gurtzeug 3 zusammen, dass Rotationsachsen des ersten Propellers 6 und des zweiten Propellers 7 in einem unbelasteten Zustand des Gurtzeuges 3 vertikal und im Flugbetrieb horizontal orientiert sind (siehe **Fig. 6, 7**). Um unerwünschte Drehmomente zu vermeiden, treibt der erste Motor 5 den ersten Propeller 6 gegenläufig zu dem zweiten Propeller 7 an. Alternativ treibt der zweite Motor 11 den zweiten Propeller 7 gegenläufig zu dem ersten Propeller 6 an. Die Rotationsrichtungen 12 des ersten Propellers 6 und des zweiten Propellers 7 sind mittels Pfeilen dargestellt. Der erste Propeller 6 und der zweite Propeller 7 weisen jeweils einen Durchmesser von 50 cm auf. Die Antriebsvorrichtung 1 weist ein Gesamtgewicht von lediglich etwa 13 kg auf, was die Antriebsvorrichtung 1 hochgradig transportabel hält. Zur Unfallverhütung sind der erste Propeller 6 und der zweite Propeller 7 jeweils teilweise in einem Propellerkäfig eingefasst.

Die **Fig. 3** zeigt eine schematische Draufsicht der Antriebsvorrichtung 1 gemäß der vorliegenden Erfindung. Die Befestigungsmittel 8 sind starr mit dem Tragrahmen 4 verbunden, beispielsweise mit dem Tragrahmen 4 verschraubt. Jedes der zwei Befestigungsmittel 8 weist eine Aufnahme zum Aufnehmen eines im Wesentlichen rechteckig geformten Karabiners des Gurtzeuges 3 auf, wobei in jedem der zwei Befestigungsmittel 8 ein Karabiner 13 aufgenommen ist. Der Tragrahmen 4 ist in seiner Mitte teilbar ausgebildet und weist dort einen bogenförmigen Bereich auf. Nahe dem ersten Motor 5 und dem zweiten Motor 11 ist der Tragrahmen 4 relativ breit ausgebildet, da in diesen Bereichen Batterien zum Versorgen des ersten Motors 5 und des zweiten Motors 11 mit elektrischer Energie angeordnet sind.

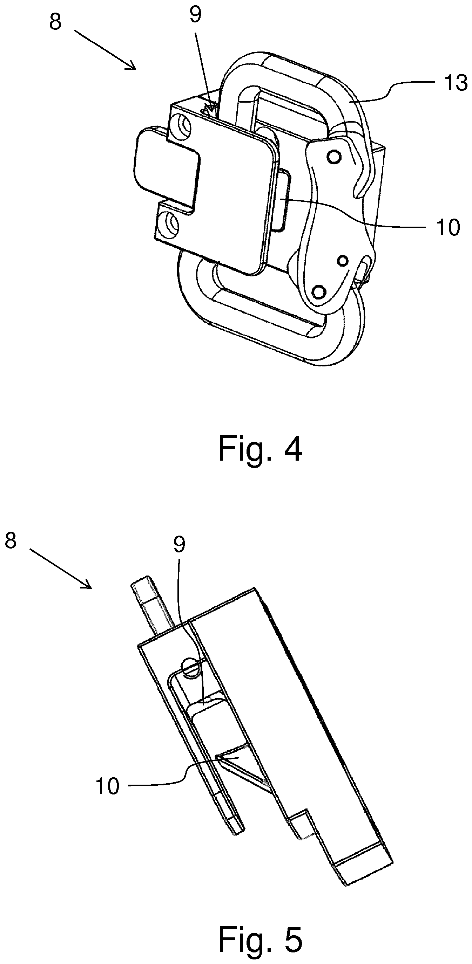

Die **Fig. 4** zeigt eine schematische perspektivische Ansicht von Befestigungsmitteln 8 der Antriebsvorrichtung 1 gemäß der vorliegenden Erfindung an einem Karabiner 13. Das Befestigungsmittel 8 ist starr mit dem in **Fig. 4** nicht dargestellten Tragrahmen 4 verbunden, beispielsweise verschraubt. Weiterhin weist das Befestigungsmittel 8 eine Aufnahme zum Aufnehmen des im Wesentlichen rechteckig geformten Karabiners 13 des Gurtzeuges 3 auf. Die Aufnahme weist einen länglichen Anschlag 9 zum Anlegen eines zumindest teilweise geraden Schenkels des Karabiners 13 und ein Rückhalteelement 10 zum Zurückhalten des Karabiners 13 an dem Anschlag 9 auf. Die Aufnahme ist U-förmig ausgebildet, um den zumindest teilweise geraden Schenkels des Karabiners 13 aufzunehmen.

Die **Fig. 5** zeigt eine schematische perspektivische Ansicht der Befestigungsmittel 8 der Antriebsvorrichtung 1 gemäß der vorliegenden Erfindung. In **Fig. 5** deutlich zu erkennen ist die U-förmige Aufnahme zum Aufnehmen des im Wesentlichen rechteckig geformten Karabiners 13 des Gurtzeuges 3. Der längliche Anschlag 9 der Aufnahme dient zum Anlegen eines zumindest teilweise geraden Schenkels des Karabiners 13, das Rückhalteelement 10 zum Zurückhalten des Karabiners 13 an dem Anschlag 9. Das Rückhalteelement 10 ist als ein hakenförmiger Vorsprung ausgebildet, der an einem federbelasteten Hebel angeordnet ist, der auf einer Achse drehbar gelagert ist. Durch Betätigen eines freien Endes des Hebels kann der Karabiner 13 freigegeben werden.

Die **Fig. 6** zeigt eine schematische perspektivische Ansicht des Gleitschirmes 2 gemäß der vorliegenden Erfindung in einer frühen Startphase eines Laufstartes. Die **Fig. 7** zeigt eine schematische perspektivische Ansicht des Gleitschirmes 2 gemäß der vorliegenden Erfindung in einer späten Startphase des Laufstartes. Die Befestigungsmittel 8 wirken derart mit dem Gurtzeug 3 zusammen, dass Rotationsachsen des ersten Propellers 6 und des zweiten Propellers 7 in einem unbelasteten Zustand des Gurtzeuges 3 vertikal (siehe **Fig. 6**) und im Flugbetrieb beziehungsweise bereits in der späten Startphase horizontal orientiert sind (siehe **Fig. 7**).

Das Verfahren zum Starten des Gleitschirmes 2 umfasst die Schritte Aufziehen des Gleitschirmes 2, Bergablaufen und Umorientieren von Rotationsachsen des ersten Propellers 6 und des zweiten Propellers 7 von einer vertikalen Richtung in eine horizontale Richtung. Alternativ umfasst das Verfahren zum Starten des Gleitschirmes 2 die Schritte Aufziehen des Gleitschirmes 2, Windenschleppen und Umorientieren von Rotationsachsen des ersten Propellers 6 und des zweiten Propellers 7 von einer vertikalen Richtung in eine horizontale Richtung. Die Verfahrensschritte sind jeweils in dieser Reihenfolge abzuarbeiten. Das Umorientieren erfolgt mit großem Vorteil mittels eines Belastens des Gurtzeuges 3 durch den Piloten und somit automatisch beim Abheben des Piloten vom Boden am Ende des Startens des Gleitschirmes 2.

### BEZUGSZEICHENLISTE

- 1: Antriebsvorrichtung
- 2: Gleitschirm
- 3: Gurtzeug
- 4: Tragrahmen
- 5: Erster Motor
- 6: Erster Propeller
- 7: Zweiter Propeller
- 8: Befestigungsmittel
- 9: Anschlag
- 10: Rückhalteelement
- 11: Zweiter Motor
- 12: Rotationsrichtung
- 13: Karabiner

## Patentansprüche

1. Antriebsvorrichtung (1) für einen Gleitschirm (2), wobei der Gleitschirm (2) ein Gurtzeug (3) zum Aufnehmen eines Piloten aufweist, umfassend einen Tragrahmen (4) und an dem Tragrahmen (4) befestigt einen ersten Motor (5), einen ersten Propeller (6) und einen zweiten Propeller (7), wobei in einem Flugbetrieb des Gleitschirmes (2) der erste Propeller (6) links von dem Piloten und der zweite Propeller (7) rechts von dem Piloten angeordnet sind und wobei der Tragrahmen (4) eine Stange aufweist, wobei der erste Propeller (6) an einem ersten Ende der Stange und der zweite Propeller (7) an einem zweiten Ende der Stange angeordnet sind und wobei im Flugbetrieb die Stange vor dem Piloten angeordnet ist, wobei der Tragrahmen (4) Befestigungsmittel (8) zum Befestigen der Antriebsvorrichtung (1) an einem Gurtzeug (3) eines antriebslosen Gleitschirmes (2) aufweist, wobei die Befestigungsmittel eine Aufnahme zum Aufnehmen eines Karabiners (13) des Gurtzeuges (3) aufweisen, **dadurch gekennzeichnet, dass** die Befestigungsmittel (8) starr mit dem Tragrahmen (4) verbunden sind, und dadurch, dass der Karabiner (13) drehfest in der Aufnahme aufgenommen ist, wobei die Aufnahme einen länglichen Anschlag (9) zum Anlegen eines zumindest teilweise geraden Schenkels des Karabiners (13) und ein Rückhalteelement (10) zum Zurückhalten des Karabiners (13) an dem Anschlag (9) aufweist, und wobei die Befestigungsmittel (8) derart mit dem Gurtzeug (3) zusammenwirken, dass bei einem Belasten des Gurtzeuges der Karabiner und mit ihm die Aufnahme gedreht wird, durch die ihrerseits der Tragrahmen und damit die Antriebseinheit aufgerichtet wird, sodass Rotationsachsen des ersten Propellers (6) und des zweiten Propellers (7) in einem unbelasteten Zustand des Gurtzeuges (3) vertikal orientiert sind und erst beim Belasten des Gurtzeugs in eine horizontale Orientierung schwenkend sind.

2. Antriebsvorrichtung nach Anspruch 1 , **dadurch gekennzeichnet, dass** das Rückhalteelement (10) als ein hakenförmiger Vorsprung ausgebildet ist, der an einem federbelasteten Hebel angeordnet ist, der auf einer Achse drehbar gelagert ist.

3. Antriebsvorrichtung nach Anspruch 2, **dadurch gekennzeichnet, dass** ein freies Ende des Hebels bei Betätigung den Karabiner (13) freigegebend ist.

4. Antriebsvorrichtung (1) nach einem der vorhergehenden Ansprüche, **dadurch gekennzeichnet, dass** die Antriebsvorrichtung (1) einen zweiten Motor (11) aufweist, wobei der erste Motor (5) den ersten Propeller (6) und der zweite Motor (11) den zweiten Propeller (7) antreibend ausgebildet sind.

5. Antriebsvorrichtung (1) nach einem der vorhergehenden Ansprüche, **dadurch gekennzeichnet, dass** der erste Motor (5) den ersten Propeller (6) gegenläufig zu dem zweiten Propeller (7) antreibend ausgebildet ist.

6. Antriebsvorrichtung (1) nach einem der vorhergehenden Ansprüche, **dadurch gekennzeichnet, dass** der erste Motor (5) und der zweite Motor (11) Elektromotoren sind.

7. Antriebsvorrichtung (1) nach einem der vorhergehenden Ansprüche, **dadurch gekennzeichnet, dass** der erste Propeller (6) und der zweite Propeller (7) unabhängig voneinander einen Durchmesser in einem Bereich von 45 cm bis 90 cm aufweisen.

8. Antriebsvorrichtung (1) nach einem der vorhergehenden Ansprüche, **dadurch gekennzeichnet, dass** die Antriebsvorrichtung (1) ein Gesamtgewicht von kleiner als 15 kg aufweist.

9. Gleitschirm (2), umfassend ein Gurtzeug (3) zum Aufnehmen eines Piloten und eine Antriebsvorrichtung (1), **dadurch gekennzeichnet, dass** die Antriebsvorrichtung (1) nach einem der vorhergehenden Ansprüche ausgebildet ist.

10. Verfahren zum Starten eines Gleitschirmes (2), wobei der Gleitschirm (2) ein Gurtzeug (3) zum Aufnehmen eines Piloten und eine Antriebsvorrichtung (1) nach einem der vorigen Ansprüche aufweist, umfassend den Schritt Aufziehen des Gleitschirmes (2), **dadurch gekennzeichnet, dass** das Verfahren den Schritt automatisches Umorientieren einer Rotationsachse eines Propellers der Antriebsvorrichtung (1) von einer vertikalen Richtung in eine horizontale Richtung mittels eines Belastens des Gurtzeuges (3) durch den Piloten beim Abheben des Piloten vom Boden am Ende des Startens des Gleitschirmes (2) umfasst.

## Claims

1. A driving device (1) for a paraglider (2), wherein the paraglider (2) has a harness (3) for receiving a pilot, comprising a support frame (4) and a first motor (5) attached to the support frame (4), a first propeller (6) and a second propeller (7), wherein during flight operations of the paraglider (2), the first propeller (6) is arranged to the left of the pilot and the second propeller (7) is arranged to the right of the pilot, and wherein the support frame (4) comprises a rod, wherein the first propeller (6) is arranged at a first end of the rod and the second propeller (7) is arranged at a second end of the rod and wherein during flight operations, the rod is arranged in front of the pilot, wherein the support frame (4) comprises securing means (8) for securing the driving device (1) to a harness (3) of a driveless paraglider (2), wherein the securing means have a receptacle for receiving a karabiner (13) of the harness (3), **characterized in that** the securing means (8) are rigidly connected to the support frame (4) and **in that** the karabiner (13) is received in the receptacle in a rotationally fixed manner, wherein the receptacle has an elongated stop (9) for engaging an at least partially straight leg of the karabiner (13) and a retaining element (10) for retaining the karabiner (13) at the stop (9), and wherein the securing means (8) cooperate with the harness (3) in such a manner that when applying a load to the harness, the karabiner and together with it the receptacle is rotated, by which in turn the support frame and thus the drive unit is set upright so that axes of rotation of the first propeller (6) and the second propeller (7) are vertically oriented in an unloaded state of the harness (3) and only pivot into a horizontal orientation when the harness is loaded.

2. The driving device according to claim 1, **characterized in that** the retaining element (10) is formed as a hook-shaped projection that is arranged on a springloaded lever which is rotatably mounted on an axle.

3. The driving device according to claim 2, **characterized in that** upon actuating a free end of the lever, the karabiner (13) is released.

4. The driving device (1) according to any one of the preceding claims, **characterized in that** the driving device (1) has a second motor (11), wherein the first motor (5) is designed to drive the first propeller (6) and the second motor (11) is designed to drive the second propeller (7).

5. The driving device (1) according to any one of the preceding claims, **characterized in that** the first motor (5) is designed to drive the first propeller (6) in the opposite direction to the second propeller (7).

6. The driving device (1) according to any one of the preceding claims, **characterized in that** the first motor (5) and the second motor (11) are electric motors.

7. The driving device (1) according to any one of the preceding claims, **characterized in that** the first propeller (6) and the second propeller (7) independently from each other have a diameter in a range from 45 cm to 90 cm.

8. The driving device (1) according to any one of the preceding claims, **characterized in that** the driving device (1) has a total weight of less than 15 kg.

9. A paraglider (2) comprising a harness (3) for receiving a pilot and a driving device (1), **characterized in that** the driving device (1) is designed according to any one of the preceding claims.

10. A method for launching a paraglider (2), wherein the paraglider (2) has a harness (3) for receiving a pilot and a driving device (1) according to any one of the preceding claims, comprising the step of inflating the paraglider (2), **characterized in that** the method comprises the step of automatically reorienting an axis of rotation of a propeller of the driving device (1) from a vertical direction to a horizontal direction by means of applying a load to the harness (3) by the pilot when the pilot takes off from the ground at the end of the launch of the paraglider (2).

## Revendications

1. Groupe propulseur (1) pour un parapente (2), le parapente (2) comportant un harnais (3) destiné à recevoir un pilote, comprenant un châssis porteur (4) et, fixé sur le châssis porteur (4), un premier moteur (5), une première hélice (6) et une deuxième hélice (7), dans un mode de vol du parapente (2), la première hélice (6) étant placée à gauche du pilote et la deuxième hélice (7) étant placée à droite du pilote et le châssis porteur (4) comportant une barre, la première hélice (6) étant placée sur une première extrémité de la barre et la deuxième hélice (7) étant placée sur une deuxième extrémité de la barre et en mode de vol, la barre étant placée à l'avant du pilote, le châssis porteur (4) comportant des moyens de fixation (8) destinés à fixer le groupe propulseur (1) sur un harnais (3) d'un parapente (2) dépourvu de propulseur, les moyens de fixation comportant un logement, destiné à recevoir un mousqueton (13) du harnais (3), **caractérisé en ce que** les moyens de fixation (8) sont assemblés de manière rigide avec le châssis porteur (4) et **en ce que** le mousqueton (13) est réceptionné de manière solidaire en rotation dans le logement, le logement comportant une butée (9) oblongue, destinée à l'appui d'une branche au moins partiellement droite du mousqueton (13) et un élément de retenue (10) , destiné à retenir le mousqueton (13) sur la butée (9), et les moyens de fixation (8) coopérant avec le harnais (3), de telle sorte que lors d'une première charge exercée sur le harnais, le mousqueton se tourne, et avec lui le logement sous l'effet duquel, pour sa part, le châssis porteur et avec lui le groupe propulseur se redresse, de sorte que, dans un état non chargé du harnais (3), des axes de rotation de la première hélice (6) et de la deuxième hélice (7) soient orientés à la verticale et ne soient pivotants dans une orientation horizontale que lors d'une charge exercée sur le harnais.

2. Groupe propulseur selon la revendication 1, **caractérisé en ce que** l'élément de retenue (10) est conçu sous la forme d'une saillie en crochet qui est placée sur un levier contraint par ressort, qui est logé de manière rotative sur un axe.

3. Groupe propulseur selon la revendication 2, **caractérisé en ce qu'**une première extrémité libre du levier est libérée lors de l'actionnement du mousqueton (13).

4. Groupe propulseur (1) selon l'une quelconque des revendications précédentes, **caractérisé en ce que** le groupe propulseur (1) comporte un deuxième moteur (11), le premier moteur (5) étant conçu pour entraîner la première hélice (6) et le deuxième moteur (11) étant conçu pour entraîner la deuxième hélice (7).

5. Groupe propulseur (1) selon l'une quelconque des revendications précédentes, **caractérisé en ce que** le premier moteur (5) est conçu pour entraîner la première hélice (6) à contresens de la deuxième hélice (7) .

6. Groupe propulseur (1) selon l'une quelconque des revendications précédentes, **caractérisé en ce que** le premier moteur (5) et le deuxième moteur (11) sont des moteurs électriques.

7. Groupe propulseur (1) selon l'une quelconque des revendications précédentes, **caractérisé en ce que** la première hélice (6) et la deuxième hélice (7) présentent indépendamment l'une de l'autre un diamètre dans un ordre de 45 cm à 90 cm.

8. Groupe propulseur (1) selon l'une quelconque des revendications précédentes, **caractérisé en ce que** le groupe propulseur (1) présente un poids total de moins de 15 kg.

9. Parapente (2), comprenant un harnais (3) destiné à recevoir un pilote et un groupe propulseur (1), **caractérisé en ce que** le groupe propulseur (1) est conçu selon l'une quelconque des revendications précédentes.

10. Procédé, destiné à faire démarrer un parapente (2), le parapente (2) comportant un harnais (3) destiné à recevoir un pilote et un groupe propulseur (1) selon l'une quelconque des revendications précédentes, comprenant l'étape consistant à élever le parapente (2), **caractérisé en ce que** le procédé comprend l'étape consistant à réorienter automatiquement un axe de rotation d'une hélice du groupe propulseur (1) d'une direction verticale dans une direction horizontale par l'exercice d'une charge sur le harnais (3) par le pilote, lors d'un soulèvement du sol du pilote, à la fin du démarrage du parapente (2).
